# EUROPEAN PATENT SPECIFICATION

(11) **EP 0 577 821 B1**
(45) Date of publication and mention of the grant of the patent: **02.06.1999**
(21) Application number: 93904388.1
(22) Date of filing: 15.01.1993
(51) Int. Cl.: A22C 21/00, B65G 17/48

(54) **DEVICE FOR CONVEYING SLAUGHTERED ANIMALS, IN PARTICULAR BIRDS**
VORRICHTUNG ZUM TRANSPORTIEREN VON SCHLACHTTTIEREN INSBESONDERE GEFLÜGEL
DISPOSITIF SERVANT A TRANSPORTER DES ANIMAUX ABATTUS PARTICULIEREMENT DES OISEAUX

(30) Priority: 17.01.1992 NL 9200090
(43) Date of publication of application: 12.01.1994
(60) Divisional application: 98203939.8
(73) Proprietor: STORK PMT B.V., 5831 AV Boxmeer (NL)
(72) Inventor: JANSSEN, Petrus Christianus Hendrikus, NL-5455 GW Wilbertoord (NL); JANSSEN, Cornelis Joannes, NL-5824 AB Holthees (NL); PEETERS, Hendricus Werner, NL-5831 ME Boxmeer (NL); VAN DEN NIEUWELAAR, Adrianus Josephes, NL-5421 XG Gemert (NL)
(74) Representative: Timmers, Cornelis Herman Johannes
(86) International application number: NL9300016
(87) International publication number: WO9313671

(56) References cited:
- EP-A- 0 086 700
- EP-A- 0 381 093
- EP-A- 0 444 782
- DE-C- 3 247 327
- FR-A- 2 589 452
- NL-A- 8 602 922
- US-A- 2 557 707
- US-A- 2 625 707
- US-A- 3 518 717
- US-A- 3 596 749
- US-A- 4 213 229
- US-A- 4 602 403
- US-A- 4 780 930

## Description

The invention relates to a device for conveying slaughtered animals, in particular birds, or a part thereof, hanging by at least one leg, the device comprising a plurality of leg carriers for the animals or parts thereof, which leg carriers are each connected by way of rotatable connecting means to a trolley of a conveyor running through a track past at least one processing station, the connecting means being rotatable about an essentially vertical axis through a predetermined angle relative to the trolley, the connecting means comprising means for fixing the angular orientation of the leg carrier relative to the trolley.

Such a device is known from EP-A-0 444 782.

In the known device it is not possible to disregard certain processing operations along the track of the conveyor. Nor is it possible, for example, to make a choice between two processing machines disposed on either side of the track.

A still further disadvantage of the known device is that it is designed to cause a fixed series of processing operations to be carried out on the slaughtered animal; it is not capable of causing the processing range to be adapted depending on certain characteristics of the slaughtered animal.

The object of the invention is to provide a device having the possibility of taking a slaughtered animal or part thereof into or out of the working range of a processing machine disposed along the conveyance track.

A further object of the invention is to provided a device for controlling the processing of a slaughtered animal being conveyed along a processing station.

According to the invention, the leg carriers are disposed eccentrically relative to the axis of rotation of the corresponding connecting means. Hereby a slaughtered animal may be taken into or out of the working range of a processing machine along the route by rotating the leg carrier. One may thus avoid using parallel transport tracks for processing animals in different ways. The processing equipment can be used more efficiently in one single transport track, processing each animal in a specific manner by selecting the equipment to be used and to be avoided.

US-A-2 625 707 discloses a gambrel device for conveying slaughtered poultry having a carrier for suspending the poultry by the legs, said carrier being swivelly mounted on a conveyor chain. The carrier is disposed eccentrically relative to the axis of rotation of the gambrel device. The angular orientation of the carrier relative to the conveyor chain is undetermined. There is no indication of bringing the poultry into or out of the working range of a processing machine disposed along the path of the conveyor.

In a preferred embodiment of the device according to the invention, the connecting means have two or more projections which project at right angles to the axis of rotation of the connecting means, and which can interact with projection operating means disposed along the track. Advantageously, the length of at least one of the projections is different from the length of the other projections. This provides the possibility of making all carriers take up the same initial position prior to a processing operation.

In a further preferred embodiment, the inventive device comprises recording means disposed along the track upstream of corresponding projection operating means for recording one or more parameters concerning each slaughtered animal or part thereof being conveyed past the recording means, and means for controlling the projection operating means on the basis of the data recorded with the recording means, in such a way that the projection operating means do or do not interact with the projections of the connecting means.

In a still further advantageous embodiment the leg carrier comprises means for accommodating the legs of the slaughtered animal, and fixing means which, interacting with the accommodating means, are adapted to enclose each leg like a ring. Preferably, the accommodating means are formed by an essentially elongated, plate-shaped element. This has the advantage that the accommodating means can be used in a production line such as that described in EP-A-0 159 731 in the name of applicants. The carriers of the device are in this case guided along the guides 6 mentioned in the patent specification, so that a very stable suspension of the animal is ensured during conveyance.

The invention will be explained in more detail with reference to the accompanying drawings, in which:
Fig. 1 shows a short section of a conveyor for slaughtered poultry;
Figs. 2A and 2B show top views, partially in cross-section of a closed and open leg carrier respectively of the conveyor of Fig. 1;
Fig. 3 shows three carriers of the conveyor disposed one after the other, in different positions along the track;
Fig. 4 shows a device from Fig. 1 turned through 90°;
Fig. 5 shows schematically in top view the interaction between a Maltese cross in the connecting means and projection operating elements disposed along the track; and
Fig. 6 shows schematically in top view a processing station for cutting wings of poultry, which is adapted for cooperation with the device for conveying slaughtered poultry.

In the drawings, like reference symbols designate like parts.

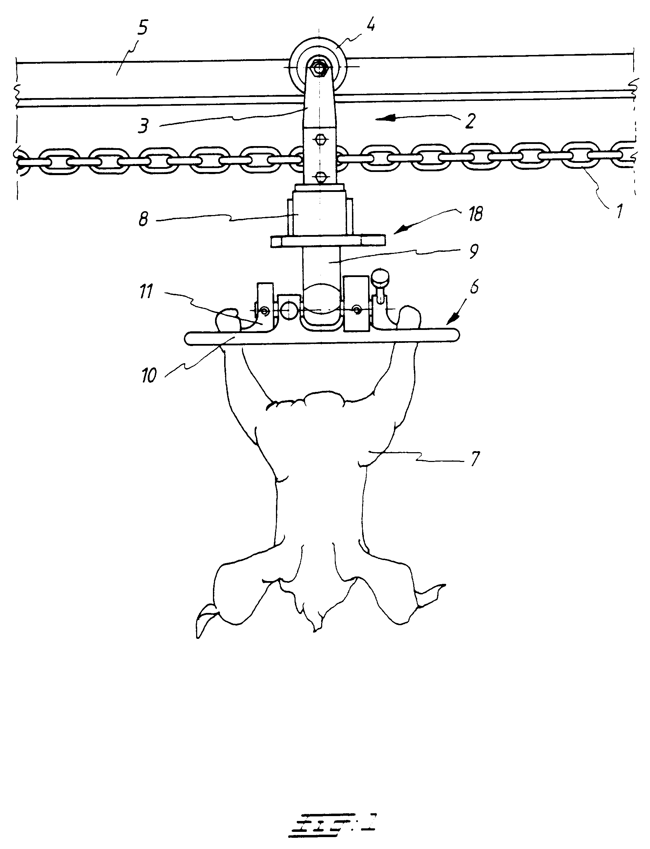

The conveyor shown in Fig. 1 is formed by a driven chain conveyor 1, provided with trolleys 2 which in a usual manner comprise a fork-shaped element 3 with wheels 4. The wheels 4 are guided along a rail 5, the shape of which determines the track of the conveyor. This track runs in the usual way through one or more processing or inspection stations (not shown). Each trolley 2 is provided with a leg carrier 6, which is suitable for accommodating the leg of a slaughtered animal, here a slaughtered bird 7, or a part thereof, and carrying it along the track of the conveyor. Each carrier 6 is fixed by way of adjustable connecting means 8 to the corresponding trolley 2. These connecting means 8 make it possible for each carrier 6 during operation to be rotatable through a predetermined angle on a vertical axis.

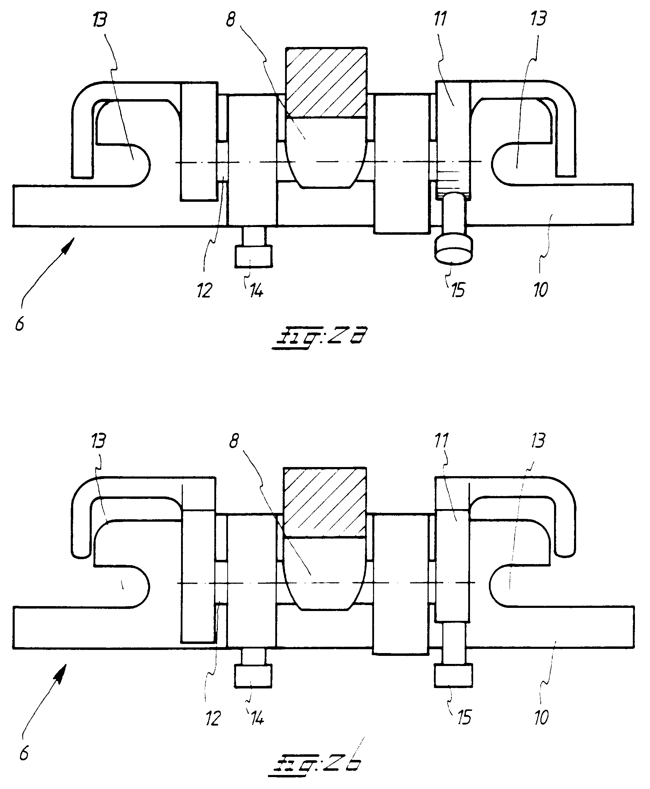

It can be seen in Fig. 2 that a carrier 6 is made up of a bearing element 10 and a shut-off device 11, which can pivot relative to each other and relative to the connecting means 8 about an axis 12. The bearing element 10 is provided with two recesses 13, in which the legs of the bird 7 can be accommodated. These recesses 13 have such dimensions that the bird 7 can hang by its tarsal joints. A virtually closed ring, in which the tarsal joint is securely confined, is produced by closing shut-off device 11. The carrier 6 also has two carrier control levers 14, 15, which can produce the rotation of the bearing element 10 and the shut-off device 11 about the axis 12.

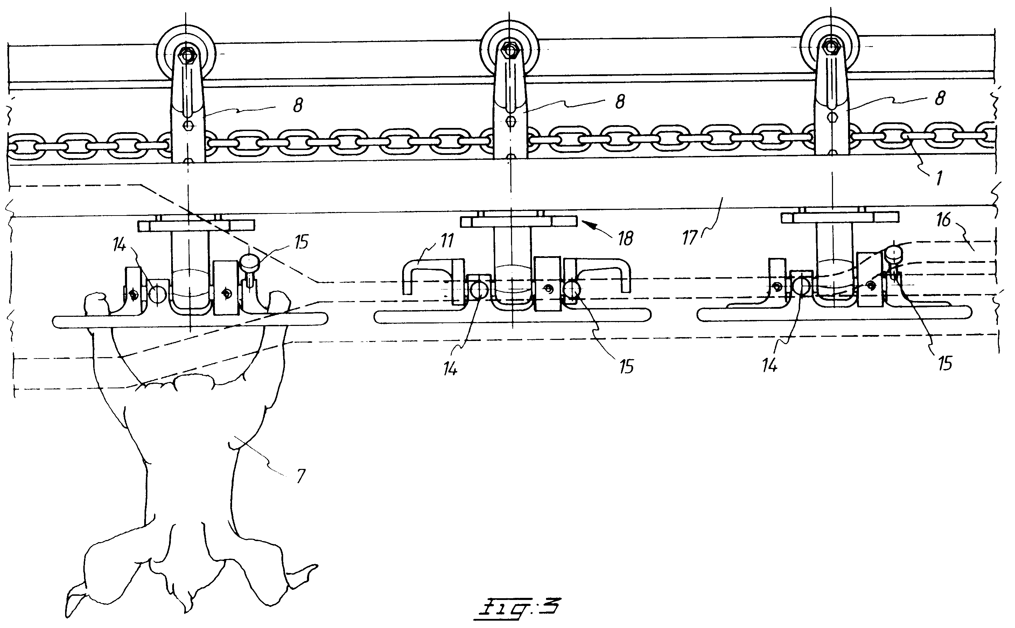

Fig. 3 shows how the two carrier control levers 14, 15 interact with guides 16 fitted on a wall (not shown) lying above the plane of the drawing, which interaction will be described below. In order to guarantee good stability in the directions at right angles to the direction of conveyance, the connecting means 8 are guided during operation of the levers 14, 15 between two parallel walls 17 running parallel to the conveyor chain 1, only one of which is shown in the figure.

The lefthand device of the three devices illustrated here shows a carrier 6, in the closed position, in which carrier a bird 7 is hanging by the legs. This situation is identical to that shown in Fig. 1. When the chain conveyor 1 moves to the right in the drawing, the carrier control lever 15 at a given moment comes into contact with guide 16, and said lever will be forced downwards as a result of this intersection, thus opening the shut-off device 11. The carrier assembly will assume the position shown in the centre of Fig. 3 when the slope of the guide 16 ends.

In the carrier on the right in the figure it can be seen how the shut-off device 11 closes again when the carrier control lever 15 goes against a rising guide (groove) 16 on moving further to the right. As a result of this the shut-off device 11 closes again.

The discharging (not shown) of the bird 7 can take place by forcing the carrier control lever 14 upwards when the shut-off device 11 is open, causing the recesses 13 to be directed with their openings downwards, as a result of which the bird 7 can be discharged from them.

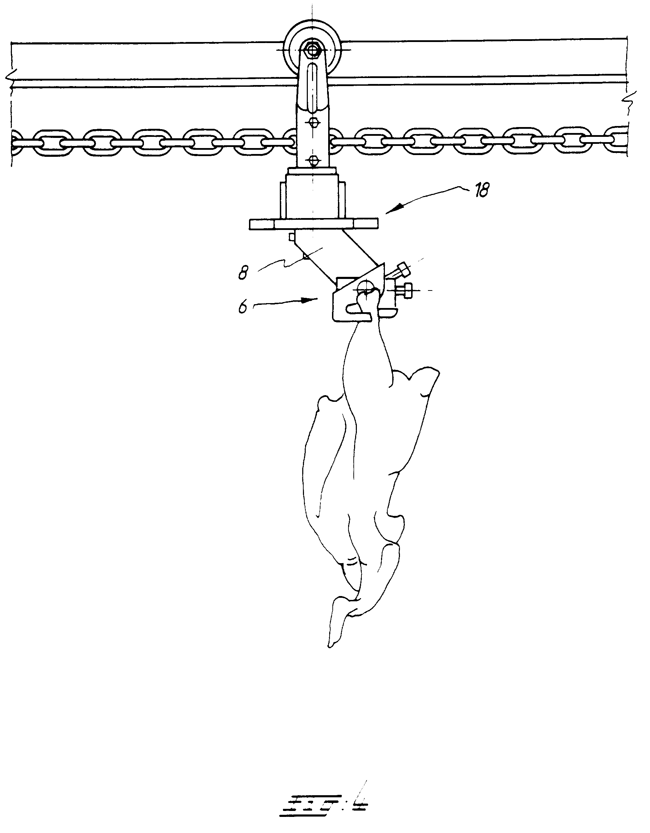

Fig. 4 shows a carrier 6 which is turned through 90° relative to the carrier from Fig. 1. The figure shows clearly that the carrier 6 is disposed eccentrically relative to the trolley, which makes it possible to bypass or actually seek the working range of certain processing machines disposed along the route.

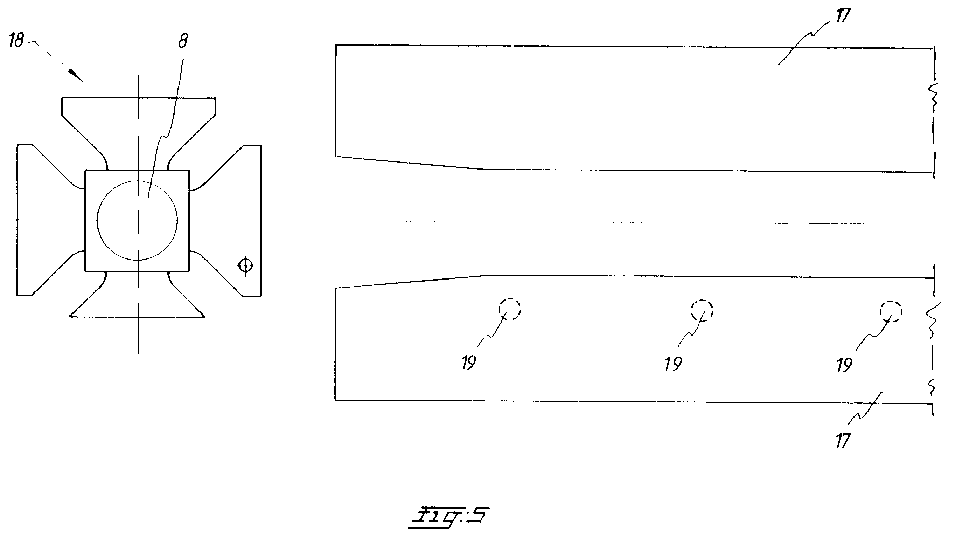

In order to be able to rotate the carrier 6 about a vertical axis, the connecting means 8 are provided with a Maltese cross 18 (Fig. 5) which interacts with arm operating elements 19 fitted at the bottom of the wall 17, and in the case of which the wall 17 acts as a guide for the connecting means. The rotation of the carrier 6 is determined by the interaction between a segment of the Maltese cross, and also by the angular orientation fixing means present (not shown) in the connecting means 8.

Fig. 5 shows that the segment with the smallest radial dimensions passes the three arm operating elements 19 undisturbed. It will be clear that no matter what the initial position of the Maltese cross 18 is, after the three arm operating elements 19 have been passed, the cross always takes up the same position, which is advantageous for then making a processing selection.

When a selection of a processing operation on the animal is being made, after said animal has been checked for certain characteristics by a recording station, it is possible with the aid of the result of the check to operate the arm operating elements 19, so that an angular orientation to be achieved by the carrier 6 can be selected. In the same way it is possible to have a processing station bypassed by the carrier 6, through the fact that as a result of its eccentric position outside the working range of the processing station in question the carrier passes said station.

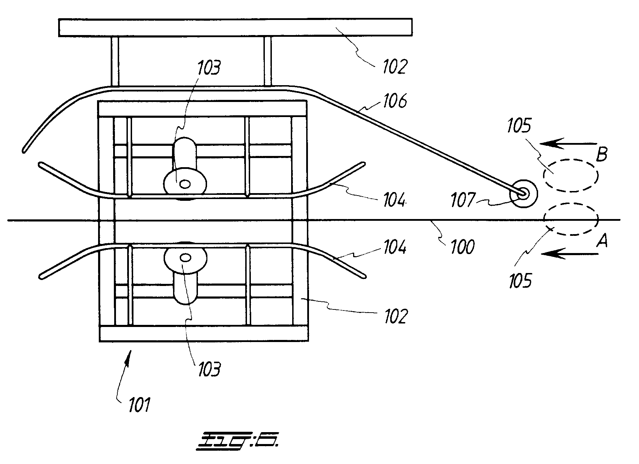

Fig. 6 shows schematically in top view a processing station 101 for cutting wings of slaughtered poultry. Slaughtered poultry 105 is carried by a device according to the invention (not shown) along a transport track 100 of a conveyor (not shown). By means of an eccentrical set up of the carrier relative to the trolley, the poultry can be brought both in position A and in position B.

The processing station consists basically of a frame 102, rotary driven cutting devices 103 for cutting the wings of poultry and wing guide bars 104 for guiding the wings of poultry so that they may take a proper position when being cut.

Also, the frame 102 carries a guide bar 106. The guide bar 106 will act on the poultry which is forwarded, in position B by guiding it sideways outside the working range of the processing station 101. After detouring the processing station the poultry will be guided back into its original position close to the transport track 100.

On the other hand, poultry in position A will not be bothered by guide bar 106 and may proceed into the working range of the station 101. The guide bar 106 is provided at its foremost end with a small rotatable wheel 107 for facilitating the guidance of poultry in position A and poultry in position B.

## Claims

1. Device for conveying slaughtered animals (7), in particular birds, or a part thereof, the device comprising:
a plurality of leg carriers (6) for the animals or parts thereof, hanging by at least one leg, each leg carrier (6) being adapted for accommodating the at least one leg of the slaughtered animal;
a plurality of trolleys (2);
a plurality of connecting means (8) each connecting a leg carrier to a trolley (2), the connecting means (8) being rotatable about an essentially vertical axis through a predetermined angle relative to the trolley (2);
means for fixing the angular orientation of the leg carrier (6) relative to the trolley (2); and
a conveyor (1) comprising said plurality of trolleys, and running through a track past at least one processing station (101),
**characterised in that** the leg carriers (6) are disposed eccentrically relative to the axis of rotation of the corresponding connecting means (8) such that the animals or parts thereof are also disposed eccentrically relative to said axis of rotation.

2. Device according to claim 1, characterised in that the means for fixing the angular orientation of the leg carrier (6) relative to the trolley (2) are comprised in the connecting means (8).

3. Device according to claim 1 or 2, characterised in that the leg carriers (6) are pivotable about a horizontal axis (12) relative to the connecting means (8).

4. Device according to any of claims 1-3, characterised in that the connecting means (8) have two or more projections which project at right angles to the axis of rotation of the connecting means, and which can interact with projection operating means (19) disposed along the track.

5. Device according to claim 4, characterised in that the length of at least one of the projections is different from the length of the other projections.

6. Device according to claim 4 or 5, characterised in that the connecting means (8) comprise a Maltese cross (18) with a number of segments which are separated from each other by grooves.

7. Device according to claim 6, characterised in that one segment has smaller radial dimensions than the remaining segments.

8. Device according to any of claims 4-7, characterised by recording means disposed along the track upstream of corresponding projection operating means (19) for recording one or more parameters concerning each slaughtered animal (7) or part thereof being conveyed past the recording means, and means for controlling the projection operating means (19) on the basis of the data recorded with the recording means, in such a way that the projection operating means (19) do or do not interact with the projections of the connecting means.

9. Device according to any of claims 1-8, characterised by guide elements (106) diverging from the conveyance track (100) in the direction of conveyance for guiding the animals (7) off the conveyance track.

10. Device according to any of claims 1-9, characterised in that the leg carrier (6) comprises means (10) for accommodating the legs of the slaughtered animal, and fixing means (11) which, interacting with the accommodating means (10), are adapted to enclose each leg like a ring.

11. Device according to claim 10, characterized in that the accommodating means (10) are formed by an essentially elongated, plate-shaped element.

12. Device according to claim 10 or 11, characterised in that the fixing means (11) are movable relative to the accommodating means.

13. Device according to any of claims 10-12, characterized in that the fixing means (11,15) are adapted to interact with control means (16) disposed along the track to retain the leg in, or release the leg from the leg carrier (6).

## Patentansprüche

1. Vorrichtung zum Transportieren von geschlachteten Tieren (7), insbesondere Vögeln, oder einem Teil davon, wobei die Vorrichtung umfasst:
eine Mehrzahl von Beinträgern (6) für die Tiere oder Teile davon, die an mindestens einem Bein hängen, wobei jeder Beinträger (6) angepasst ist, um das mindestens eine Bein des geschlachteten Tiers aufzunehmen;
eine Mehrzahl von Laufkatzen (2);
eine Mehrzahl von Verbindungseinrichtungen (8), die jeweils einen Beinträger mit einer Laufkatze (2) verbinden, wobei die Verbindungseinrichtungen (8) um eine im Wesentlichen vertikale Achse über einen vorbestimmten Winkel in Bezug zur Laufkatze (2) drehbar sind;
Einrichtungen zum Fixieren der Winkelausrichtung des Beinträgers (6) in Bezug zur Laufkatze (2); und
einen Förderer (1), umfassend die besagte Mehrzahl von Laufkatzen und durch eine Spur an mindestens einer Verarbeitungsstation (101) vorbeilaufend,
**dadurch gekennzeichnet, dass** die Beinträger (6) in Bezug zur Drehachse der entsprechenden Verbindungseinrichtungen (8) exzentrisch angeordnet sind, so dass die Tiere oder Teile davon in Bezug zu der besagten Drehachse ebenfalls exzentrisch angeordnet sind.

2. Vorrichtung nach Anspruch 1, dadurch gekennzeichnet, dass die Einrichtungen zum Fixieren der Winkelausrichtung des Beinträgers (6) in Bezug zur Laufkatze (2) in den Verbindungseinrichtungen (8) enthalten sind.

3. Vorrichtung nach Anspruch 1 oder 2, dadurch gekennzeichnet, dass die Beinträger (6) in Bezug zu den Verbindungseinrichtungen (8) um eine horizontale Achse (12) schwenkbar sind.

4. Vorrichtung nach einem der Ansprüche 1 - 3, dadurch gekennzeichnet, dass die Verbindungseinrichtungen (8) zwei oder mehr Fortsätze aufweisen, die im rechten Winkel zur Drehachse der Verbindungseinrichtungen überstehen und die mit Fortsatzbetätigungseinrichtungen (19) zusammenwirken können, welche entlang der Spur angeordnet sind.

5. Vorrichtung nach Anspruch 4, dadurch gekennzeichnet, dass sich die Länge von mindestens einem der Fortsätze von der Länge der anderen Fortsätze unterscheidet.

6. Vorrichtung nach Anspruch 4 oder 5, dadurch gekennzeichnet, dass die Verbindungseinrichtungen (8) ein Malteserkreuz (18) umfassen, mit einer Anzahl von Segmenten, die durch Nuten voneinander getrennt sind.

7. Vorrichtung nach Anspruch 6, dadurch gekennzeichnet, dass ein Segment kleinere radiale Abmessungen aufweist als die übrigen Segmente.

8. Vorrichtung nach einem der Ansprüche 4 - 7, gekennzeichnet durch Aufzeichnungseinrichtungen, die entlang der Spur vor entsprechenden Fortsatzbetätigungseinrichtungen (19) angeordnet sind, um einen oder mehrere Parameter aufzuzeichnen, die jedes geschlachtete Tier (7) oder Teil davon betreffen, das an der Aufzeichnungseinrichtung vorbeitransportiert wird, sowie Einrichtungen zum Steuern der Fortsatzbetätigungseinrichtungen (19) auf der Grundlage der mit den Aufzeichnungseinrichtungen aufgezeichneten Daten, in einer solchen Weise, dass die Fortsatzbetätigungseinrichtungen (19 mit den Fortsätzen der Verbindungseinrichtungen zusammenwirken oder nicht.

9. Vorrichtung nach einem der Ansprüche 1 - 8, gekennzeichnet durch Führungselemente (106), die in Transportrichtung von der Transportspur (100) divergieren, um die Tiere (7) von der Transportspur weg zu lenken.

10. Vorrichtung nach einem der Ansprüche 1 - 9, dadurch gekennzeichnet, dass der Beinträger (6) Einrichtungen (10) zur Aufnahme der Beine des geschlachteten Tiers umfasst, sowie Befestigungseinrichtungen (11), die, mit den Aufnahmeeinrichtungen (10) zusammenwirkend, angepasst sind, um jedes Bein wie ein Ring zu umschließen.

11. Vorrichtung nach Anspruch 10, dadurch gekennzeichnet, dass die Aufnahmeeinrichtungen (10) von einem im wesentlichen länglichen plattenförmigen Element gebildet werden.

12. Vorrichtung nach Anspruch 10 oder 11, dadurch gekennzeichnet, dass die Befestigungseinrichtungen (11) in Bezug zu den Aufnahmeeinrichtungen beweglich sind.

13. Vorrichtung nach einem der Ansprüche 10 - 12, dadurch gekennzeichnet, dass die Befestigungseinrichtungen (11, 15) angepasst sind, um mit Steuereinrichtungen (16) zusammenzuwirken, die entlang der Spur angeordnet sind, um das Bein im Beinträger (6) festzuhalten oder es aus diesem freizugeben.

## Revendications

1. Dispositif pour transporter des animaux abattus (7), en particulier des volailles, ou une partie de ceux-ci, comportant :
- plusieurs supports de pattes (6) pour les animaux ou pour des parties de ceux-ci qui sont pendus par au moins une patte, chaque support de pattes (6) étant apte à recevoir la ou les pattes de l'animal abattu ;
- plusieurs chariots (2) ;
- plusieurs moyens de liaison (8) qui relient chacun un support de pattes à un chariot (2), ces moyens de liaison (8) étant aptes à tourner autour d'un axe essentiellement vertical suivant un angle prédéterminé par rapport au chariot (2) ;
- des moyens pour fixer l'orientation angulaire du support de pattes (6) par rapport au chariot (2) ; et
- un convoyeur (1) comportant lesdits chariots et circulant sur une trajectoire qui passe devant au moins un poste de traitement (101),
**caractérisé** en ce que les supports de pattes (6) sont excentrés par rapport à l'axe de rotation des moyens de liaison (8) correspondants, de sorte que les animaux ou des parties de ceux-ci sont excentrés eux aussi par rapport à l'axe de rotation.

2. Dispositif selon la revendication 1, caractérisé en ce que les moyens pour fixer l'orientation angulaire du support de pattes (6) par rapport au chariot (2) sont contenus dans les moyens de liaison (8).

3. Dispositif selon la revendication 1 ou 2, caractérisé en ce que les supports de pattes (6) sont aptes à pivoter autour d'un axe horizontal (12) par rapport aux moyens de liaison (8).

4. Dispositif selon l'une quelconque des revendications 1 à 3, caractérisé en ce que les moyens de liaison (8) comportent au moins deux saillies qui dépassent à angle droit par rapport à l'axe de rotation desdits moyens de liaison et qui peuvent coopérer avec des moyens d'actionnement de saillies (19) disposés sur la trajectoire.

5. Dispositif selon la revendication 4, caractérisé en ce que la longueur de l'une au moins des saillies est différente de la longueur des autres.

6. Dispositif selon la revendication 4 ou 5, caractérisé en ce que les moyens de liaison (8) ont la forme d'une croix de Malte (18) pourvue d'un certain nombre de segments qui sont séparés les uns des autres par des rainures.

7. Dispositif selon la revendication 6, caractérisé, en ce qu'un segment a des dimensions radiales inférieures à celles des autres segments.

8. Dispositif selon l'une quelconque des revendications 4 à 7, caractérisé par des moyens d'enregistrement disposés le long de la trajectoire, en amont des moyens d'actionnement de saillies correspondants (19), pour enregistrer au moins un paramètre concernant chaque animal abattu (7), ou une partie de celui-ci, qui passe devant les moyens d'enregistrement, et des moyens pour commander lesdits moyens d'actionnement de saillies (19) sur la base des données enregistrées à l'aide des moyens d'enregistrement, de telle sorte que les moyens d'actionnement de saillies (19) coopèrent ou ne coopèrent pas avec les saillies des moyens de liaison.

9. Dispositif selon l'une quelconque des revendications 1 à 8, caractérisé par des éléments de guidage (106) qui s'éloignent de la trajectoire de transport (100) définie dans le sens de transport, pour faire sortir les animaux (7) de la trajectoire de transport.

10. Dispositif selon l'une quelconque des revendications 1 à 9, caractérise en ce que le support de pattes (6) comporte des moyens (10) pour recevoir les pattes de l'animal abattu, et des moyens de fixation (11) qui, en coopérant avec les moyens de réception (10), sont aptes à entourer chaque patte comme une bague.

11. Dispositif selon la revendication 10, caractérisé en ce que les moyens de réception (10) sont définis par un élément en forme de plaque essentiellement allongé.

12. Dispositif selon la revendication 10 ou 11, caractérisé en ce que les moyens de fixation (11) sont mobiles par rapport aux moyens de réception.

13. Dispositif selon l'une quelconque des revendications 10 à 12, caractérisé en ce que les moyens Se fixation (11, 15) sont aptes a coopérer avec des moyens de commande (16), disposés le long de la trajectoire, pour retenir la patte dans le support de pattes (6) ou pour la dégager de celui-ci.
